Europäisches Patentamt

(19) European Patent Office

Office européen des brevets

(11) Publication number: **0 194 715**
**B1**

## EUROPEAN PATENT SPECIFICATION

(45) Date of publication of the patent specification:
06.12.89

(51) Int. Cl.⁴: **C01B 21/26**

(21) Application number: 86200331.6

(22) Date of filing: 04.03.86

(54) Process for preparing nitric oxide.

(30) Priority: 05.03.85  NL 8500608

(43) Date of publication of application:
17.09.86 Bulletin 86/38

(45) Publication of the grant of the patent:
06.12.89 Bulletin 89/49

(84) Designated Contracting States:
BE CH DE IT LI NL

(56) References cited:
DE-C- 514 392
FR-A- 1 259 431
GB-A- 1 186 408

(73) Proprietor: STAMICARBON B.V., Mijnweg 1, NL-6167 AC Geleen(NL)

(72) Inventor: Clement, Gerrit Pieter, Dr. Schaepmanlaan 85, NL-6191 BP Beek (L.)(NL)
Inventor: Maessen, Johannes Gerardus Hendrikus, Karthuizerlaan 17, NL-6042 NB Roermond(NL)
Inventor: Greving, Geert, Vriendenkringstraat 23, NL-6141 LG Limbricht(NL)

ACTORUM AG

## Description

The invention relates to a process for preparing nitric oxide by catalytic combustion of ammonia with molecular oxygen in the presence of a protective gas and in which process nitrogen dioxide, formed during the combustion and/or oxygen still remaining in the reaction gas are removed selectively in whole or in part by a catalytic reduction using hydrogen.

Such a process is known from the NL-B 149.761, while this process is mentioned also in Ullmanns Encyklopädie der Technischen Chemie 4(13), page 170.

Nitric oxide can generally be prepared by catalytic combustion of ammonia with oxygen at elevated temperature according to the reaction equation: $4 NH_3 + 5 O_2 \rightarrow 4 NO + 6 H_2O$. In the manufacture of nitric acid this reaction is used as the initial step. In order to preclude explosion of the gas mixture (the lower explosion limit of an $NH_3$-$O_2$ mixture is at about 14 % (vol) $NH_3$) and overheating of the catalyst (above 900 ℃ the strength of the catalyst decreases strongly, so that the catalyst is affected), the $NH_3$-$O_2$ mixture is diluted with an inert gas. In the manufacture of nitric acid $N_2$ is used as diluting or protective gas (air is used as $O_2$ source). For the preparation of NO preference is given to choosing a diluent that can easily be separated off from the NO. Technically, for the preparation of pure NO the dilution with water vapour is applied, which is described in, inter alia, US-A-3110563. In such a process, in which the reaction gases are cooled out, so that the water vapour present is condensed, and in which practically pure NO is obtained from the remaining gas, which NO is contaminated with a small amount of nitrogen and nitrous oxide, a large quantity of water is used, which must be supplied as a protective gas in the form of steam and which is released from the process after the combustion as a highly dilute nitric acid solution.

It has now been found that this disadvantage can be avoided by effecting the dilution of the reactants in the combustion with a part of the reaction gas as protective gas in the preparation of NO by catalytic oxidation of $NH_3$ with molecular oxygen.

The process according to the invention is consequently characterized in that a part of the reaction gas released from the combustion is used as protective gas while care is being taken that in the feed to the catalytic combustion the ratio between the amount of ammonia, the amount of oxygen and the amount of protective gas is such that the percentage by volume of ammonia is lower than 14 % and while the rest of the reaction gas released from the combustion is subjected to the catalytic reduction with hydrogen, upon which the desired nitric oxide is recovered from this treated reaction gas.

For the preparation of nitric acid it is known per se to recirculate a part of the reaction gas to the combustion. This is mentioned in the DE-C 514,392 of 11th December 1930. In that process the $NH_3$ combustion however, is so set that the reaction gas substantially contains nitrogen dioxide, which is the desired component for the preparation of nitric acid. Later it has been found, from the study of A.P. Zasorin and V.I. Atroshchenko, decribed in J. Appl. Chem. USSR 40(7) 1364-8 (1967), that combustion of $NH_3$ for the purpose of preparing nitric acid, in the presence of NO, gives a lower combustion yield, because undesired reaction products are formed owing, inter alia, to a reaction of NO with $NH_3$ to form nitrous oxide and nitrogen.

It has now surprisingly been found, however, that in the combustion of $NH_3$ to substantially NO the adverse effects of a recycling of NO through the use of a part of the reaction gas as protective gas are more than compensated by the economic advantages of omitting the supply of fresh steam as protective gas. The advantages of the dilution with reaction gas are, inter alia: saving of steam and consequently energy, in the process a much smaller cooler-condenser is required, while a more profitable use is made of the oxygen fed to the combustion, which is partly returned in the recycle gas to the combustion.

As appears from the reaction equation of the oxidation, the stoechiometric $O_2$/$NH_3$ ratio in the combustion is 1.25 moles/mole. It has been found, however, that in metering $NH_3$ and $O_2$ in this ratio the combustion yield is low. This is due to a substantial part of the $NH_3$ being converted then into $N_2$ via the reaction: $4 NH_3 + 3 O_2 \rightarrow 2 N_2 + 6 H_2O$. A good combustion yield is obtained with an $O_2$/$NH_3$ ratio $\geq$ 1.3, so with an excess of $O_2$. Now, by recycling a part of the reaction gas to the oxidation, $O_2$ and $NH_3$ can be supplied in a ratio of about 1.25 moles per mole, while, owing to the recycle, the required $O_2$/$NH_3$ ratio at the catalyst is yet $\geq$ 1.3. An $O_2$/$NH_3$ ratio higher than 1.5 will result in an increased formation of nitrogen dioxide. Preference is therefore given to setting the molar $O_2$/$NH_3$ ratio in the feed to the combustion at a value between 1.3 : 1 and 1.5 : 1.

The temperature at which the feed to the combustion is set according to the process is determined on the one side by the fact that below about 300 ℃ there is a chance of ammonium nitrite deposits and on the other by the fact that because the $NH_3$ combustion is an adiabatic process and a combustion temperature above 900 ℃ is to be avoided, an ever diminishing percentage of $NH_3$ must be admitted to the feed as the feed temperature rises in order not to exceed the maximum end temperature. Preference is therefore given to supplying the mixture of protective gas, oxygen and ammonia to the combustion at a temperature between 300 and 450 ℃. At the maximum end temperature of about 900 ℃ and with an adiabatic temperature increase of 600 ℃ this means an $NH_3$ concentration in the feed of about 9 % (vol).

The hot reaction gas of the catalytic combustion of ammonia also contains, in addition to NO and $H_2O$, about 1 % (vol) $O_2$. This is due to the metering of an excess of $O_2$, which is necessary to restrict the formation of $N_2$ and $N_2O$ at the catalyst. Depending on the temperature and the contact time, a certian portion of this $O_2$ will react with NO according to $2 NO + O_2 \rightarrow 2 NO_2$. Consequently, a part of the $O_2$ is present in the form of $NO_2$. Sometimes $O_2$-equivalents are spoken of:

$O_{2\ eq} = O_{2\ free} + > NO_2$.

In the process as described in US-A-3,110,563, in which the combustion is followed by cooling-condensation of the reaction gases, the excess of $O_2$ is removed with the condensate as nitric acid via the formation of $NO_2$. An alternative method for removing the $O_2$-equivalents is to reduce them by means of a fuel, for instance with hydrogen. Such a process is known from, inter alia, the NL-B 149.761. In that process the combustion gas is mixed with $H_2$ and passed over a catalyst with the following reduction reactions taking place:

$H_2 + NO_2 \rightarrow NO + H_2O$

$2 H_2 + O_2 \rightarrow 2 H_2O$.

At the same time a part of the NO is converted into the undesired byproducts $N_2$ and $N_2O$. After removal of $H_2O$ from the treated reaction gas via condensation, the end product remains, which substantially consists of NO. This reaction can be carried out at a reaction pressure of 0.1 MPa and higher. In principle also carbon monoxide, methane (natural gas) and gaseous hydrocarbons are eligible as reductants, next to hydrogen. Thermal reduction, too, is possible in principle. In practice these other reductants are less suitable for the preparation of pure NO, because a major disadvantage of these is that the reaction product formed is $CO_2$, which must be removed separately. Moreover, CO, which is hard to remove, may also find its way into the reaction gas. The thermal reduction (650-1300 °C) produces substantially more unfavourable results.

Catalytic reduction is applied also for the purpose of removing $NO_x$ from the residual gas of nitric acid plants. That knowledge cannot be used, because in that process the only object will in principle be the selective conversion of $NO_x$ into $N_2$ and to a lesser degree of $NO_2$ into NO (discolouration). This means that from the point of view of saving on fuel it is desired to restrict the reduction of the free $O_2$. This $NO_x$ reduction therefore differs in principle from the reduction process desired for the preparation of pure NO.

Catalytic reduction using $H_2$ is preferred to the reaction of $O_2$ to $NO_2$, because during the reduction the desired NO is formed and a much smaller amount of nitric acid is formed, which is an undesired product.

As it is desirable for the preparation of pure NO to reduce all $O_2$-equivalents, the temperature at which the reduction is carried out is preferably taken in the range of 350-400 °C. At lower temperatures it has been found that the $NO_2$ is, but the free $O_2$ is not removed, while higher temperatures are undesirable owing to a strong formation of $N_2O$ and/or $N_2$.

In applying a process according to the invention it is possible to reach a purity of the NO prepared in this way higher than 95 % (vol). Such a purity is particularly suitable for one of the most important uses of the NO, namely in the catalytic reduction to hydroxyl amine, which as such is a raw material for the preparation of caprolactam, the monomer of nylon-6.

The invention will be further elucidated by means of the following non-restrictive experiments.

Comparative experiment A

For the combustion of ammonia a quartz glass reactor was used with an inside diameter of 2.3 cm. This reactor contained 4 nets of 90 % platinum, 10 % rhodium with a wire thickness of 60 μm and, per net, 1024 meshes per $cm^2$.

To this reactor were metered, via a preliminary column heated at 300 °C:

36.0 g/hour $NH_3$

61.8 l(NTP)/hour $O_2$

290.0 l(NTP)/hour steam

so that the molar oxygen-ammonia ratio was 1.30. The temperature of the nets was 880 °C. After the reactor the gas was cooled to about 150 °C by means of a water-cooled condenser and subsequently passed through a 20 % KOH solution. The gas obtained after the passing through was subjected to a gaschromatographic analysis and the amounts of $N_2$ and $N_2O$ produced were determined along with the off-gas yield. On this basis the combustion yield to NO + $NO_2$ was determined. 1.14 l(NTP)/hour $N_2$ and 0.24 l(NTP)/hour $N_2O$ were formed, while in the reaction gas no $NH_3$ could be demonstrated any more. Of the amount of $NH_3$ used 94.2 % was converted into NO + $NO_2$, the yield of $N_2$ and $N_2O$ was respectively 4.8 % and 1.0 %.

Comparative experiment B

Under the same conditions as in comparative experiment A were metered to the reactor:

36.0 g/hour $NH_3$

68.9 l(NTP)/hour $O_2$

290.0 l(NTP)/hour steam,

so that the molar oxygen-ammonia ratio was 1.45. 0.47 l(NTP)/hour $N_2$ and 0.17 l(NTP)/hour $N_2O$ were formed, while in the reaction gas no $NH_3$ could be demonstrated any more. Of the amount of $NH_3$ used 97.3 % was converted into NO + $NO_2$, the yield of $N_2$ and $N_2O$ was respectively 2 % and 0.7 %.

Example-experiment I

The recirculation of reaction gas as protective gas in the combustion of ammonia was simulated by metering extra NO and steam to an $NH_3$-$O_2$ mixture, the NO/steam ratio corresponding with that in the off gas of the reactor of comparative experiment A. Unlike comparative experiment A, in which a fresh supply of steam is used, reaction gas is used in this example-experiment containing steam obtained as reaction product of the combustion. The gas flows were fed to the reactor at a temperature of 380 °C. The $O_2$-$NH_3$ molar ratio in the feed to the reactor was 1.45; as a total recirculation includes the recirculation of residual $O_2$, the said $O_2$-$NH_3$ ratio of 1.45 corresponds with an $O_2/NH_3$ molar ratio in the $NH_3$-$O_2$ makeup gas of about 1.3 as used in comparative experiment A.

To the reactor operated at a net temperature of 880 °C were metered:

29.9 g/hour $NH_3$

57.2 l(NTP)/hour $O_2$

256.0 l(NTP)/hour steam

172.2 l(NTP)/hour NO.
With total combustion of NH₃, 1.02 l(NTP)/hour N₂ and 0.55 l(NTP)/hour N₂O were formed. Of the amount of NH₃ used 92.0 % was converted into NO + NO₂, the yield of N₂ and N₂O was 5.2 % and 2.8 % respectively.

Example-experiment II

Under further identical conditions as in example-experiment I the $O_2/NH_3$ ratio in the feed to the reactor was set at 1.35, which corresponds, in case of total recirculation, with an $O_2/NH_3$ ratio in the make-up gas of about 1.25. To the reactor were metered:
29.9 g/hour NH₃
53.2 l(NTP)/hour O₂
256.0 l(NTP)/hour steam
172.2 l(NTP)/hour NO.
With total combustion of NH₃, 5.57 l(NTP)/hour N₂ and 2.91 l(NTP)/hour N₂O were formed. Of the amount of NH₃ used 89.2 % was converted into NO + NO₂, the yield of N₂ and N₂O was 7.1 % and 3.7 % respectively.

## Claims

1. Process for preparing nitric oxide by catalytic combustion of ammonia with molecular oxygen in the presence of a protective gas and in which process nitrogen dioxide, formed during the combustion and/or oxygen still remaining in the reaction gas are removed selectively in whole or in part by a catalytic reduction using hydrogen, the process being characterized in that a part of the reaction gas released from the combustion is used as protective gas while care is being taken that in the feed to the catalytic combustion the ratio between the amount of ammonia, the amount of oxygen and the amount of protective gas is such that the percentage by volume of ammonia is lower than 14 % and while the rest of the reaction gas released from the combustion is subjected to the catalytic reduction with hydrogen, upon which the desired nitric oxide is recovered from this treated reaction gas.

2. Process according to claim 1, characterized in that the feed to the combustion is so set that the molar ratio of oxygen to ammonia is 1.3 : 1 to 1.5 : 1.

3. Process according to any one of claims 1-2, characterized in that the mixture of the protective gas with the fresh ammonia and the fresh oxygen is supplied to the catalytic combustion with a temperature of 300-450 ⌶C.

4. Process according to any one of claims 1-3, characterized in that the catalytic reduction with hydrogen is carried out at a temperature of 350-400 ⌶C.

## Patentansprüche

1. Verfahren zum Herstellen von Stickoxid durch katalytische Verbrennung von Ammoniak mit molekularem Sauerstoff in Anwesenheit eines Schutzgases, in welchem Verfahren während der Verbrennung gebildetes Stickstoffdioxid und/oder Sauerstoff, der im Reaktionsgas noch vorhanden ist, zur Gänze oder teilweise durch katalytische Reduktion unter Verwendung von Wasserstoff selektiv entfernt werden, dadurch gekennzeichnet, daß ein Teil des von der Verbrennung freigesetzten Reaktionsgases als Schutzgas verwendet wird, wobei darauf geachtet wird, daß in der Zufuhr zur katalytischen Verbrennung das Verhältnis zwischen der Ammoniakmenge, der Sauerstoffmenge und der Schutzgasmenge derart ist, daß der Volumenprozentsatz an Ammoniak niedriger als 14% ist und wobei der Rest des von der Verbrennung freigesetzten Reaktionsgases der katalytischen Reduktion mit Sauerstoff unterworfen wird, worauf das gewünschte Stickoxid aus diesem behandelten Reaktionsgas gewonnen wird.

2. Verfahren nach Anspruch 1, dadurch gekennzeichnet, daß die Zufuhr zur Verbrennung so eingestellt wird, daß das Molverhältnis von Sauerstoff zu Ammoniak 1,3:1 bis 1,5:1 beträgt.

3. Verfahren nach einem der Ansprüche 1 bis 2, dadurch gekennzeichnet, daß die Mischung des Schutzgases mit dem frischen Ammoniak und dem frischen Sauerstoff der katalytischen Verbrennung mit einer Temperatur von 300 bis 450°C zugeführt wird.

4. Verfahren nach einem der Ansprüche 1 bis 3, dadurch gekennzeichnet, daß die katalytische Reduktion mit Wasserstoff bei einer Temperatur von 350 bis 400°C durchgeführt wird.

## Revendications

1. Procédé de préparation d'oxyde nitrique par combustion catalytique d'ammoniac avec de l'oxygène moléculaire en présence d'un gaz protecteur, procédé dans lequel on élimine sélectivement en totalité ou en partie le bioxyde d'azote formé pendant la combustion et/ou l'oxygène qui demeure dans le gaz de réaction, par une réaction catalytique en utilisant de l'hydrogène, ce procédé étant caractérisé en ce qu'on utilise une partie du gaz de réaction dégagé par la combustion en qualité de gaz protecteur tout en prenant soin que dans l'alimentation à la combustion catalytique, le rapport entre la quantité d'ammoniac, la quantité d'oxygène et la quantité de gaz protecteur soient tels que le pourcentage en volume d'ammoniac soit inférieur à 14% tandis que le restant du gaz de réaction libéré par la combustion est soumis à une réduction catalytique avec l'hydrogène après quoi on récupère l'oxyde nitrique désiré de ce gaz de réaction traité.

2. Procédé selon la revendication 1, caractérisé en ce que l'alimentation de la zone de combustion est réglée de façon que le rapport molaire de l'oxygène à l'ammoniac soit compris entre 1,3:1 et 1,5:1.

3. Procédé selon l'une quelconque des revendications 1 et 2, caractérisé en ce qu'on fournit le mélange du gaz protecteur avec l'ammoniac frais et l'oxygène frais à la combustion catalytique à une température de 300 à 450°C.

4. Procédé selon l'une quelconque des revendications 1 à 3, caractérisé en ce qu'on effectue la réduction catalytique avec l'hydrogène à une température de 350 à 400°C.